# EUROPÄISCHE PATENTSCHRIFT

(11) **EP 0 897 211 B1**
(45) Veröffentlichungstag und Bekanntmachung des Hinweises auf die Patenterteilung: **24.01.2001**
(21) Anmeldenummer: 98115285.3
(22) Anmeldetag: 13.08.1998
(51) Int. Cl.: H02K 5/22, H02K 11/04, B60T 8/36, F04B 53/22

(54) **Motor-Pumpen-Aggregat, insbesondere Kraftfahrzeug-Antiblockier-Bremsvorrichtung**
Motor-pump assembly, in particular vehicle braking antiblocking system
Ensemble motopompe, en particulier système anti-bloquage de freins pour véhicule

(30) Priorität: 14.08.1997 DE 19735403
(43) Veröffentlichungstag der Anmeldung: 17.02.1999
(73) Patentinhaber: SIEMENS AKTIENGESELLSCHAFT, 80333 München (DE); SIEMENS AUTOMOTIVE S.A., 31036 Toulouse Cédex (FR)
(72) Erfinder: Gilly, Joachim, Dipl.-Ing. (FH), 97230 Estenfeld (DE); Heim, Norbert, Dipl.-Ing., 97228 Rottendorf (DE); Hohm, Dietmar, Dr., 31170 Tournefeuille (FR)
(74) Vertreter: Epping, Wilhelm, Dr.-Ing.

(56) Entgegenhaltungen:
- WO-A-95/21758
- DE-A- 4 325 499
- US-A- 5 137 455

## Beschreibung

Die Erfindung bezieht sich auf ein Motor-Pumpen-Aggregat, insbesondere eine Kraftfahrzeug-Antiblockier-Bremsvorrichtung, gemäß Patentanspruch 1.

Motor-Pumpen-Aggregate für Antiblockier-Bremsvorrichtungen mit einem Elektromotor und einem an diesem stirnseitig anliegenden Pumpengehäuse sind z.B. durch die EP 0 654 875 B1 bzw. die DE 42 35 962 A1 bekannt.

Im Falle der erstgenannten EP 0 645 875 Bl ist u.a. eine Elektronik - Regel-/Steuerschaltung einschließlich ihrer leistungsintensiven Schaltungs-Bauteile in einem Elektronik-Gehäuse an der dem Elektromotor abgewandten Stirnseite des Pumpengehäuses untergebracht, wobei eine die elektronischen Bauteile der Regel- bzw. Steuerschaltung aufnehmende Schaltplatine in größerem axialen Abstand zu dem Pumpengehäuse angeordnet ist. Elektrische Versorgungs- bzw. Steuerleitungen führen vom Inneren des Elektronikgehäuses zum Inneren des Motorgehäuses durch das Innere des Pumpengehäuses. Durch die zweitgenannte DE 42 35 962 A1 ist es u.a. bekannt, den pumpengehäuseseitigen Lagerschild als Bürstentragplatte eines als Elektromotor vorgesehenen Elektro-Kommutatormotors auszubilden.

Gemäß Aufgabe vorliegender Erfindung soll bei voll gewährleisteter Betriebstüchtigkeit die gegenseitige elektrische Übertragungsverbindung zwischen der Elektronik - Regel-/Steuerschaltung in dem Elektronikgehäuse einerseits und den elektrischen Bauteilen der Leistungsseite des Elektromotors innerhalb des Motorgehäuses andererseits fertigungs- und montagetechnisch vereinfacht werden.

Die Lösung dieser Aufgabe gelingt erfindungsgemäß durch ein Motor-Pumpen-Aggregat gemäß Anspruch 1; vorteilhafte Ausgestaltungen der Erfindung sind jeweils Gegenstand der Unteransprüche.

Bei dem erfindungsgemäßen Motor-Pumpen-Aggregat können die elektrischen Verbindungen der Regel- bzw. Steuerschaltung zu den pumpengehäuseseitigen Kontakten sowie die elektrischen Verbindungen der motorgehäuseseitigen elektrischen Bauteile der Leistungsseite zu den motorseitigen Kontakten andererseits als selbständige Bauteileinheiten verlegt, vorpositioniert und vormontiert werden; die gegenseitige Kontaktgabe an der Kontakt-Schnittstelle erfolgt in weiterer Vereinfachung des Fertigungs- und Montageablaufes bei der gegenseitigen Montage von Pumpengehäuse einerseits und Motorgehäuse andererseits dann selbsttätig nach Art einer Preß-Kontaktverbindung.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in perspektivischer Ansicht das Pumpengehäuse mit außenmantelseitigem Elektronikgehäuse vor der stirnseitigen Axialmontage mit dem Motorgehäuse;
- FIG 2: in perspektivischer Ansicht das Motorgehäuse noch ohne Abdeckkappe für die Kontaktierungs-Schnittstelle und vor der stirnseitigen Axialmontage mit dem Pumpengehäuse;
- FIG 3: eine Axialansicht des montierten Motor-Pumpen-Aggregates, teilweise im Schnittbild;
- FIG 4: eine Detailausschnitt aus FIG 3 im Bereich der Kontakt-Schnittstelle.

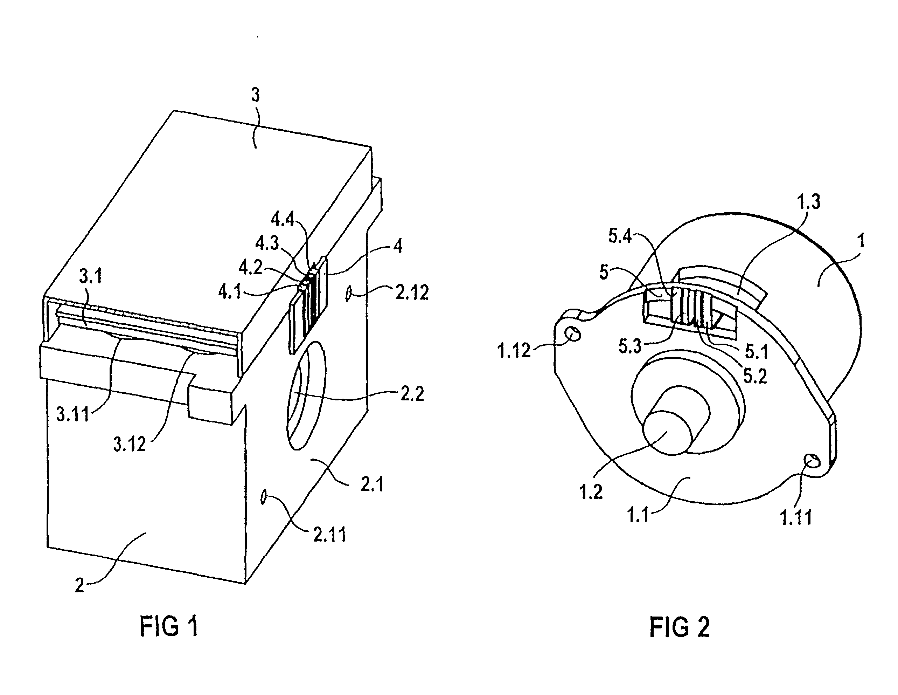

In jeweils perspektivischer Ansicht zeigt FIG 1 ein Pumpengehäuse 2 mit einem außenmantelseitig aufgesetzten Elektronikgehäuse 3 und FIG 2 ein Motorgehäuse 1 vor der gegenseitigen stirnseitigen Axialmontage von Pumpengehäuse 2 mit Eelktronikgehäuse 3 einerseits und Motorgehäuse 1 andererseits.

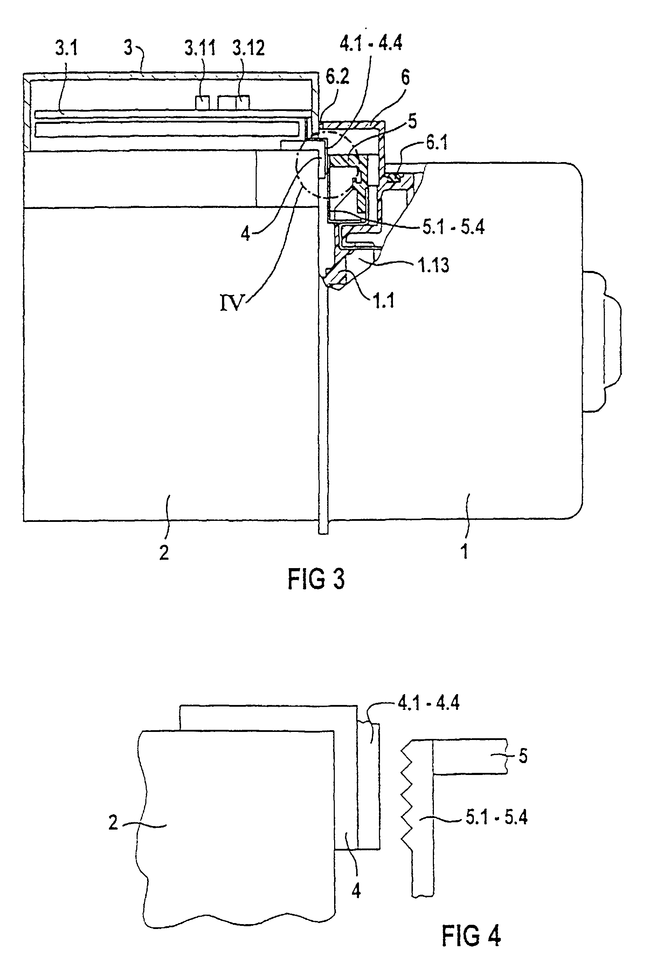

Bei der gegenseitigen Montage von Motorgehäuse 1 und Pumpengehäuse 2 mit Elektronikgehäuse 3 zu der in Axialansicht fertigen Montageeinheit gemäß FIG 3 kommt der stirnseitige Flansch 3.1 des Pumpengehäuses 2 dichtend zur Anlage gegen einen Lagerschild, der als Bürstentragplatte 1.1 das offene Ende des topfförmigen Motorgehäuses 1 eines hier vorgesehenen Kommutatormotors abschließt. Dabei wird das Motor-Abtriebswellenende 1.2 in eine Aufnahme 2.2 des Pumpengehäuses 2 gesteckt und treibt dort Pumpenstößel einer Kolbenpumpe an. Zur gegenseitigen Befestigung von Pumpengehäuse 2 mit Elektronikgehäuse 3 einerseits und Motorgehäuse 1 andererseits dienen motorgehäuseseitige Flanschbefestigungen 1.11;1.12 in der Bürstentragplatte 1.1 bzw. korrespondierende pumpengehäuseseitige Flanschbefestigungen 2.11;2.12 in dem Stirnflansch 2.1 des Pumpengehäuses 2.

Am Außenumfang des Pumpengehäuses 2 ist ein Elektronikgehäuse 3 dichtend angelegt, das - wie aus der hier offen gezeigten Vorderseite ersichtlich - z.B. eine Regel- bzw. Steuerschaltung mit einer Leiterplatte 3.1 und darauf gehaltenen und kontaktierten Steuer- bzw. Regelbauteilen 3.11;3.12 aufnimmt. Die Speiseleitungen für die durch die Bauteile 3.1 bzw.3.11; 3.12 repräsentierte Elektronik - Regel-/Steuerschaltung sowie deren Signalleitungen für die z.B. durch Bürsten 1.13 des Kommutatormotors im Motorgehäuse 1 repräsentierten elektrischen Bauteile sind zu Kontakten 4.1;4.4 (z.B. Leistungskontakte) bzw. zu Kontakten 4.2;4.3 (z.B. Signalkontakte) geführt. Die Kontakte 4.1-4.4 sind von einer Kontaktstützplatte 4 aufgenommen, die sich stirnseitig an dem Pumpengehäuse 2 abstützt. Korrespondierende jeweils zugeordnete Kontakte 5.1;5.4 (z.B. als Leistungskontakte) und Kontakte 5.2;5.3 (z.B. als Signalkontakte) sind auf einer motorgehäuseseitigen Kontaktstützplatte 5 gehalten, die ihrerseits an der Bürstentragplatte 1.1 abstützbar ist.

Bei der gegenseitigen Axialmontage von Motorgehäuse 1 und Pumpengehäuse 2 kommen die korrespondierenden Kontakte 4.1-4.4 in einer Kontakt-Schnittstelle mit den jeweils korrespondierenden Kontakten 5.1-5.4 nach Art einer Preß-Kontaktverbindung selbsttätig in elektrisch leitende gegenseitige Verbindung.

Zur Verbesserung des Kontaktes ist nach einer Ausgestaltung gemäß FIG 4 vorgesehen, zumindest die Kontakte einer Seite mit einer kontaktschneidenden, insbesondere gezahnten, Oberfläche zu versehen, die sich bei der gegenseitigen Montage von Motorgehäuse 1 und Pumpengehäuse 2 in die axial gegenüberliegenden Kontakte eingräbt.

Zur fertigungs- und montagetechnisch einfachen Abdichtung der Kontakt-Schnittstelle ist eine Abdeckkappe 6 vorgesehen, die als vorzugsweise einstückiger Bestandteil der, insbesondere ab Kunststoff-Spritzgußteil hergestellten, Bürstentragplatte 1.1 bei der Montage der Bürstentragplatte in eine Abdeckkappen-Ausnehmung 6.1 des Motorgehäuses 1 einsteckbar ist; die Abdeckkappe 6 ist in vorteilhafter Weise mittels randseitiger Dichtungen 6.1 bzw.6.2 sowohl gegenüber dem angrenzenden Rand des Motorgehäuses 1 als auch gegenüber dem andrückenden Elektronikgehäuse 3 abdichtbar.

## Patentansprüche

1. Motor-Pumpen-Aggregat, insbesondere Kraftfahrzeug-Antiblockier-Bremsvorrichtung, enthaltend einen Elektromotor mit einem Motorgehäuse (1), eine Hydraulikpumpe mit einem Pumpengehäuse (2) und eine Elektronik - Regel-/Steuerschaltung in einem Elektronikgehäuse (3) mit den Merkmalen:
a) Das Motorgehäuse (1) ist mit seiner einen Stirnseite an der axial gegenüberliegenden einen Stirnseite des Pumpengehäuses (2) montierbar;
b) das Elektronikgehäuse (3) ist am Außenumfang des Pumpengehäuses (2) angeordnet;
c) die Elektronik - Regel-/Steuerschaltung ist mit elektrischen Bauteilen innerhalb des Motorgehäuses (1) über eine Kontakt-Schnittstelle mit pumpengehäuseseitigen Kontakten (4.1-4.4) einerseits und korrespondierenden motorgehäuseseitigen Kontakten (5.1-5.4) verbindbar;
d) die gegenseitig leitende Verbindung der Kontakte (4.1-4.4 bzw.5.1-5.4) erfolgt durch die gegenseitige Montage von Motorgehäuse (1) einerseits und Pumpengehäuse (2) mit Elektronikgehäuse (3) andererseits.

2. Motor-Pumpen-Aggregat nach Anspruch 1 mit dem Merkmal:
e) Die pumpengehäuseseitigen Kontakte (4.1-4.4) sind von einer pumpengehäuseseitigen Kontaktstützplatte (4) und die motorgehäuseseitigen Kontakte (5.1-5.4) sind von einer motorgehäuseseitigen Kontaktstützplatte (5) aufgenommen.

3. Motor-Pumpen-Aggregat nach Anspruch 1 und/oder 2 mit dem Merkmal:
f) Die pumpengehäuseseitigen Kontakte (4.1-4.4) bzw. die pumpengehäuseseitige Kontaktstützplatte (4) sind an der Stirnseite des Pumpengehäuses (2) abgestützt.

4. Motor-Pumpen-Aggregat nach zumindest einem der Ansprüche 1-3 mit dem Merkmal:
g) Die motorgehäuseseitigen Kontakte (5.1-5.4) bzw. die motorgehäuseseitige Kontaktstützplatte (5) sind an einem pumpengehäuseseitigen Lagerschild des Motorgehäuses (1) abgestützt.

5. Motor-Pumpen-Aggregat nach zumindest einem der Ansprüche 1-3 mit den Merkmalen:
h) Als Elektromotor ist ein Kommutatormotor mit einer im Motorgehäuse (1) an dessen pumpenseitigem axialem Ende angeordneten Bürstentragplatte (1.1) vorgesehen;
i) die motorgehäuseseitigen Kontakte (5.1-5.4) bzw. die motorgehäuseseitige Kontaktstützplatte (5) sind an der pumpengehäuseseitigen Bürstentragplatte (1.1) abgestützt und mit elektrischen Bauteilen auf der Bürstentragplatte (1.1) verbunden.

6. Motor-Pumpen-Aggregat nach Anspruch 5 mit dem Merkmal:
j) Die Bürstentragplatte (1.1) ist gleichzeitig als pumpengehäuseseitiges Lagerschild des Kommutatormotors ausgebildet.

7. Motor-Pumpen-Aggregat nach zumindest einem der Ansprüche 1-16 mit dem Merkmal:
k) Die pumpengehäuseseitigen Kontakte (4.1-4.4) bzw. die pumpengehäuseseitige Kontaktstützplatte (4) und/oder die motorgehäuseseitigen Kontakte (5.1-5.4) bzw. die motorgehäuseseitige Kontaktstützplatte (5) sind zumindest teilbereichsweise außerhalb des Elektronikgehäuses (3) bzw. des Motorgehäuses (1) geführt.

8. Motor-Pumpen-Aggregat nach Anspruch 7 mit dem Merkmal:
l) Die außerhalb von Elektronikgehäuse (3) bzw. Motorgehäuse (1) geführten Bereiche der Kontakte (4.1-4.4 bzw.5.1-5.4) bzw. der Kontaktstützplatte (4 bzw.5) sind nach außen durch eine Abdeckkappe (6) feuchtigkeitsdicht abgedeckt.

9. Motor-Pumpen-Aggregat nach Anspruch 9 mit dem Merkmal:
m) Die Abdeckkappe (6) ist in das Motorgehäuse (1) eingesetzt und gegenüber dem Motorgehäuse (1) und dem Elektronikgehäuse (3) abgedichtet.

10. Motor-Pumpen-Aggregat nach Anspruch 8 und/oder 9 mit dem Merkmal:
n) Die Abdeckkappe (6) ist einstückiger Teil der, isnbesondere als Kunststoff-Spritzgußteil gefertigten, Bürstentragplatte (1.1).

## Claims

1. Motor-pump assembly, in particular vehicle braking antiblocking system, comprising an electric motor with a motor housing (1), a hydraulic pump with a pump housing (2) and an electronics closed-loop/open-loop circuit in an electronics housing (3), with the features:
a) the motor housing (1) can be mounted with its one end face against the axially opposite one end face of the pump housing (2);
b) the electronics housing (3) is arranged on the outer periphery of the pump housing (2);
c) the electronics closed-loop/open-loop circuit can be connected to electrical components within the motor housing (1) via a contact interface with contacts on the pump housing side (4.1-4.4) on the one hand and corresponding contacts on the motor housing side (5.1-5.4) on the other hand;
d) the mutually conducting connection of the contacts (4.1-4.4 and 5.1-5.4) takes place by the motor housing (1) on the one hand and the pump housing (2) with the electronics housing (3) on the other hand being mounted on one another.

2. Motor-pump assembly according to Claim 1, with the feature:
e) the contacts on the pump housing side (4.1-4.4) are accommodated by a contact supporting plate on the pump housing side (4) and the contacts on the motor housing side (5.1-5.4) are accommodated by a contact supporting plate on the motor housing side (5).

3. Motor-pump assembly according to Claim 1 and/or 2, with the feature:
f) the contacts on the pump housing side (4.1-4.4) and the contact supporting plate on the pump housing side (4) are supported on the end face of the pump housing (2).

4. Motor-pump assembly according to at least one of Claims 1-3, with the feature:
g) the contacts on the motor housing side (5.1-5.4) and the contact supporting plate on the motor housing side (5) are supported on a bearing plate of the motor housing (1) on the pump housing side.

5. Motor-pump assembly according to at least one of Claims 1-3, with the features:
h) a commutator motor with a brush carrying plate (1.1), arranged in the motor housing (1) at its axial end on the pump side, is provided as the electric motor;
i) the contacts on the motor housing side (5.1-5.4) and the contact supporting plate on the motor housing side (5) are supported on the brush carrying plate on the pump housing side (1.1) and are connected to electrical components on the brush carrying plate (1.1).

6. Motor-pump assembly according to Claim 5, with the feature:
j) the brush carrying plate (1.1) is designed at the same time as a bearing plate of the commutator motor on the pump housing side.

7. Motor-pump assembly according to at least one of Claims 1-6, with the feature:
k) the contacts on the pump housing side (4.1-4.4) and the contact supporting plate on the pump housing side (4) and/or the contacts on the motor housing side (5.1-5.4) and the contact supporting plate on the motor housing side (5) are led outside the electronics housing (3) and the motor housing (1), respectively, at least in certain subregions.

8. Motor-pump assembly according to Claim 7, with the feature:
l) the regions of the contacts (4.1-4.4 or 5.1-5.4) and of the contact supporting plate (4 or 5) that are led outside the electronics housing (3) and the motor housing (1) are covered towards the outside in a moisture-proof manner by a covering cap (6).

9. Motor-pump assembly according to Claim 9, with the feature:
m) the covering cap (6) is fitted into the motor housing (1) and sealed with respect to the motor housing (1) and the electronics housing (3).

10. Motor-pump assembly according to Claim 8 and/or 9, with the feature:
n) the covering cap (6) is an integral part of the brush carrying plate (1.1), produced in particular as a plastics injection moulding.

## Revendications

1. Groupe motopompe, en particulier dispositif de freinage antiblocage de véhicule automobile, comprenant un moteur électrique pourvu d'un boîtier (1) de moteur, une pompe hydraulique pourvue d'un corps (2) de pompe et un montage électronique de régulation et/ou de commande dans un boîtier (3) d'unité électronique, comportant les caractéristiques suivantes :
a) le boîtier (1) de moteur peut être monté par un de ses côtés frontaux sur le côté frontal axialement opposé du corps (2) de pompe ;
b) le boîtier (3) d'unité électronique est disposé sur la périphérie extérieure du corps (2) de pompe ;
c) le montage électronique de régulation et/ou de commande peut être raccordé à des composants électriques à l'intérieur du boîtier (1) de moteur au moyen d'une interface de contact comprenant des contacts (4.1. à 4.4) du côté du corps de pompe d'une part et des contacts (5.1 à 5.4) correspondants du côté du boîtier de moteur d'autre part ;
d) le raccordement conducteur réciproque des contacts (4.1 à 4.4 et 5.1 à 5.4) respectifs s'effectue par l'assemblage du boîtier (1) de moteur d'une part avec le corps (2) de pompe pourvu du boîtier (3) d'unité électronique d'autre part.

2. Groupe motopompe suivant la revendication 1, comportant la caractéristique suivante :
e) les contacts (4.1. à 4.4) du côté du corps de pompe sont reçus par une plaque (4) de soutien de contacts du boîtier de pompe, et les contacts (5.1 à 5.4) du côté du boîtier de moteur sont reçus par une plaque (5) de soutien de contacts du boîtier de moteur.

3. Groupe motopompe suivant la revendication 1 et/ou 2, comportant la caractéristique suivante :
f) les contacts (4.1. à 4.4) du corps de pompe ou la plaque (4) de soutien de contacts du côté du boîtier de pompe s'appuient sur le côté frontal du corps (2) de pompe.

4. Groupe motopompe suivant au moins l'une des revendications 1 à 3, comportant la caractéristique suivante :
g) les contacts (5.1 à 5.4) du boîtier de moteur ou la plaque (5) de soutien de contacts du côté du boîtier de moteur s'appuient sur un flasque, du côté du corps de pompe, du boîtier (1) de moteur.

5. Groupe motopompe suivant au moins l'une des revendications 1 à 3, comportant les caractéristiques suivantes :
h) il est prévu comme moteur électrique un moteur à collecteur pourvu, dans le boîtier (1) de moteur, d'une plaque (1.1) porte-balais qui est disposée à l'extrémité axiale de ce boîtier qui est du côté de la pompe ;
i) les contacts (5.1 à 5.4) du côté du boîtier de moteur ou la plaque (5) de soutien de contacts du côté du boîtier de moteur s'appuient sur la plaque (1.1) porte-balais, du côté du corps de pompe, et sont reliés à des composants électriques sur la plaque (1.1) porte-balais.

6. Groupe motopompe suivant la revendication 5, comportant la caractéristique suivante :
j) la plaque (1.1) porte-balais est conçue en même temps comme flasque, du côté du corps de pompe, du moteur à collecteur.

7. Groupe motopompe suivant au moins l'une des revendications 1 à 6, comportant la caractéristique suivante :
k) les contacts (4.1. à 4.4) du côté du corps de pompe ou encore la plaque (4) de soutien de contacts du côté du corps de pompe, et/ou les contacts (5.1 à 5.4) du côté du boîtier du moteur ou la plaque (5) de soutien de contacts du côté du boîtier de moteur, passent au moins partiellement en dehors du boîtier (3) d'unité électronique ou, respectivement, du boîtier (1) de moteur.

8. Groupe motopompe suivant la revendication 7, comportant la caractéristique suivante :
I) les parties des contacts (4.1 à 4.4 ou respectivement 5.1 à 5.4) ou de la plaque (4 ou respectivement 5) de soutien de contacts qui passent en dehors du boîtier (3) d'unité électronique ou respectivement du boîtier (1) de moteur sont recouvertes vers l'extérieur, à l'épreuve de l'humidité, par un capot (6) de recouvrement.

9. Groupe motopompe suivant la revendication 8, comportant la caractéristique suivante :
m) le capot (6) de recouvrement est inséré dans le boîtier (1) de moteur et rendu étanche vis-à-vis du boîtier (1) de moteur et du boîtier (3) d'unité électronique.

10. Groupe motopompe suivant la revendication 8 et/ou 9, comportant la caractéristique suivante :
n) le capot (6) de recouvrement fait partie d'un seul tenant de la plaque (1.1) porte-balais, fabriquée notamment sous forme de pièce en matière plastique moulée par injection.
